# EUROPEAN PATENT SPECIFICATION

(11) **EP 1 454 934 B1**
(45) Date of publication and mention of the grant of the patent: **28.06.2006**
(21) Application number: 04004544.5
(22) Date of filing: 27.02.2004
(51) Int. Cl.: C08G 18/62, C09D 175/04

(54) **Two-component coating compositions**
Zweikomponenten-Beschichtungszusammensetzungen
Compositions de revêtement à deux composants

(30) Priority: 03.03.2003 US 451446 P
(43) Date of publication of application: 08.09.2004
(73) Proprietor: E.I. DU PONT DE NEMOURS AND COMPANY, Wilmington, Delaware 19898 (US)
(72) Inventor: Huybrechts, Jozef Theresia, 2360 Oud-Turnhout (BE); Vaes, Ann, 2500 Koningshooikt (BE)
(74) Representative: Biering, Christine

(56) References cited:
- EP-A- 1 201 690
- WO-A-01/64793
- US-A- 3 892 714
- US-A- 6 130 286
- US-A- 6 162 886

## Description

### Background of the Invention

### Field of the Invention

The invention relates to solvent-based two-component coating compositions comprising hydroxy-functional lactone-modified (meth)acrylic copolymers and polyisocyanate hardeners that are useful for automotive and industrial coatings.

### Description of Related Art

In automotive coatings in particular, there is a need for two-component coating compositions which produce scratch resistant and chemical resistant coatings. It is already known from the prior art that scratch resistant coatings can be obtained in general by using hydroxy-functional (meth)acrylic copolymers whose hydroxyl groups are modified with lactones. But in addition to good scratch resistance, these coating compositions require the development on curing of good hardness and are required to have balanced physical drying properties.

For example, coating compositions for automotive coatings that are based on lactone-modified (meth)acrylic copolymers and polyisocyanate cross-linking agents are described in EP-A-1 227 113. The (meth)acrylic copolymers are prepared from pre-adducts of lactones and hydroxyalkyl(meth)acrylates and additional unsaturated monomers. The scratch resistance of the coatings achieved with these compositions still requires improvement.

US Patent 3,892,714 describes hydroxyfunctional (meth)acrylic copolymers with main and side chains whereby the main chains comprise a copolymer of ethylenically unsaturated monomers, at least one of which contains hydroxyl groups, and the side chains comprise lactone chains attached to said hydroxyl groups The copolymers may be prepared and subsequently modified with the lactone or the side chain may be attached to an ethylenically unsaturated hydroxy monomer and the copolymer is then prepared by polymerization with other unsaturated monomers. The amount of lactone added is from 10-60 weight %, related to the weight of the unmodified copolymer. Besides hydroxy functional unsaturated monomers styrene, vinyl toluene, methyl methacrylate, vinyl acetate and butyl methacrylate are preferably used as other monomers. Disadvantages of these coating compositions are poor hardness development, poor physical drying performance and the compositions still have insufficient scratch resistance.

WO-A-00/37524 is directed to coating compositions based on acrylic polyols that are the polymerization products of 20-70 weight % of hydroxy functional (meth)acrylate monomers and 30-80 weight % of (meth)acrylate monomers without hydroxyl groups, wherein hydroxy functional (meth)acrylate monomers comprising 0.5-15 weight % of a (meth)acrylate in which the esterifying group is the residue of a glycidyl group and includes a branched alkyl group, preferably reaction products of (meth)acrylic acid with glycidyl esters of saturated alpha,alpha'-dialkylalkane monocarboxylic acids having 7 to 13 carbon atoms in the molecule, 5-40 weight % of a (meth)acrylate in which the esterifying group is a hydroxy ester having one or more ester groups, preferably adducts of hydroxy alkyl (meth)acrylates and lactones and 0-40 weight % of other hydroxy functional monomers. These coating compositions develop insufficient hardness but have insufficient scratch resistance.

EP-A-1 201 690 relates to hydroxyfunctional methacrylic copolymers containing epoxyfunctional unsaturated monomers, compounds with carboxyl and hydroxyl groups being reacted with the epoxy functional groups of the unsaturated monomers, and additional unsaturated monomers. Optionally, the polymer can be reacted with a lactone. Disadvantages of coating compositions based on these copolymers and polyisocyanate hardeners are poor drying performance and insufficient hardness. US-A-6 162 886 describes a copolymer produced from glycidyl neodecanoate, acrylic acid, styrene, 2-hydroxyethyl methacrylate, methyl methacrylate and ε-caprolactone. The lactone content can vary from 1 to 10 weight %.

Accordingly, there is a need for automotive clear coat compositions which not only have very good scratch resistance but also meet requirements for excellent physical drying properties and hardness development, especially after drying at relatively low temperatures (e.g. below 80° C).

### Summary of the Invention

The invention is directed to two-component coating compositions comprising
A) at least one hydroxy-functional (meth)acrylic copolymer having an OH value from 160 to 200 mg KOH/g and a weight average molecular weight Mw from 2,500 to 30,000 and
B) at least one polyisocyanate cross-linking agent;
wherein the hydroxy-functional (meth)acrylic copolymer A) is obtained by
Al) free-radically copolymerizing a monomer mixture comprising
   a) 30-60 wt-% of at least one hydroxy functional free-radically copolymerizable olefinically unsaturated monomer,
   b) 15-40 wt-% of at least one cycloaliphatic ester of a free-radically copolymerizable olefinically unsaturated carboxylic acid and
   c) 10-40 wt-% of at least one additional free-radically copolymerizable olefinically unsaturated monomer which is different from component a) and b) and
All) reacting at least part of the hydroxyl groups of the hydroxy-functional (meth)acrylic copolymer obtained in step Al) with
   d) 18-40 wt-% at least one lactone compound;
wherein the proportions by weight of components a) to d) totalling 100 wt-% and wherein the hydroxy-functional (meth)acrylic copolymer obtained in step Al) has a glass transition temperature Tg of at least 50° C and wherein said copolymer is free of epoxy-functional free-radically copolymerizable olefinically unsaturated monomers.

### Detailed Description of the Embodiments

The term (meth)acrylic as used here and hereinafter should be taken to mean methacrylic and/or acrylic. Wt-% should be taken to mean weight percent.

Surprisingly, it was found that hydroxy-functional (meth)acrylic copolymers prepared in this way, when used in coating compositions with isocyanate-crosslinker, form coatings having in particular a balanced ratio among excellent scratch resistance, good hardness development and physical drying performance.

Preferred hydroxy-functional (meth)acrylic copolymers A) have an OH value from 170 to 190 mg KOH/g and a weight average molecular weight Mw from 2,500 to 20,000.

Preferred hydroxy-functional (meth)acrylic copolymers obtained in step Al) have an OH value from 170 to 280 mg KOH/g, a weight average molecular weight Mw from 2,000 to 20,000 and an acid value of 0 to 40 mg KOH/g. The glass transition temperature Tg of said copolymer is preferably from 60° C to 100° C. The glass transition temperature of the copolymer has been calculated from the glass transition temperature of the homopolymers of the monomers according to the Flory-Fox equation. Glass transition temperatures of the homopolymers have been used measured by differential scanning calorimetry (DSC).

In the following, the invention will be described in more detail. The hydroxy-functional (meth)acrylic copolymers A) comprise 30-60 wt-% of component a), 15-40 wt-% of component b), 10-40 wt-% of component c) and 18-40 wt-%, most preferably 20-30 wt-% of component d), wherein the proportions by weight of components a) to d) totaling 100 wt-%.

Examples of suitable hydroxy-functional olefinically unsaturated monomers (component a) are hydroxyalkyl esters of alpha, beta-olefinically unsaturated monocarboxylic acids having primary or secondary hydroxyl groups. Examples include the hydroxyalkyl esters of acrylic acid, methacrylic acid, crotonic acid and/or isocrotonic acid. The hydroxyalkyl esters of (meth)acrylic acid are preferred. The hydroxyalkyl radicals may contain, for example, 1 to 10 carbon atoms, preferably 2 to 6 carbon atoms. Examples of suitable hydroxyalkyl esters of alpha, beta-olefinically unsaturated monocarboxylic acids having primary hydroxyl groups are hydroxyethyl (meth)acrylate, hydroxypropyl (meth)acrylate, hydroxybutyl (meth)acrylate, hydroxyamyl (meth)acrylate, and hydroxyhexyl (meth) acrylate. Examples of suitable hydroxyalkyl esters having secondary hydroxyl groups are 2-hydroxypropyl (meth)acrylate, 2-hydroxybutyl (meth)acrylate, and 3-hydroxybutyl (meth)acrylate.

Further hydroxy-functional unsaturated monomers which may be used are reaction products of alpha, beta-unsaturated monocarboxylic acids with glycidyl esters of saturated monocarboxylic acids branched in the alpha position, e.g., with glycidyl esters of saturated alpha-alkylalkane monocarboxylic acids or alpha,alpha'-dialkylalkane monocarboxylic acids. These are preferably the reaction products of (meth)acrylic acid with glycidyl esters of saturated alpha,alpha'-dialkylalkane monocarboxylic acids having 7 to 13 carbon atoms in the molecule, particularly preferably having 9 to 11 carbon atoms in the molecule. Other hydroxy-functional unsaturated monomers are polyethylene oxide and/or polypropylene oxide modified (meth)acrylates.

Examples of suitable cycloaliphatic esters of olefinically unsaturated carboxylic acids (component b) are cycloaliphatic esters of olefinically unsaturated carboxylic acids with cycloaliphatic alcohols. Examples of suitable olefinically unsaturated carboxylic acids include acrylic acid, methacrylic acid, crotonic acid and isocrotonic acid. The alcohols are, in particular, cycloaliphatic monohydric branched or unbranched alcohols having 1-20 carbon atoms in the molecule. Component c) concerns preferably cycloaliphatic esters of (meth)acrylic acid. The cycloaliphatic (meth)acrylates may also be substituted. The substituents are, for example, one or more, e.g., up to three alkyl groups, particularly those having 1-4 carbon atoms. Preferred examples for cycloaliphatic esters of (meth)acrylic acid are cyclohexyl acrylate, trimethylcyclohexyl acrylate, 4-tert. butylcyclohexyl acrylate, isobornyl acrylate and the corresponding methacrylates.

The additional olefinically unsaturated monomers capable of radical polymerization of component c) are any olefinically unsaturated monomers capable of free-radical polymerization, which are different from a) and b) with exception of epoxy-functional free-radically copolymerizable olefinically unsaturated monomers. Examples of additional suitable unsaturated monomers may contain apart from an olefinic double bond further functional groups or may contain apart from an olefinic double bond no further functional groups. Component c) preferably comprises: olefinically unsaturated carboxylic acids capable of free-radical polymerization, aliphatic esters of olefinically unsaturated carboxylic acids capable of free-radical polymerization, vinyl ester and /or vinylaromatic hydrocarbons.

Examples of suitable olefinically unsaturated carboxylic acids include acrylic acid, methacrylic acid, crotonic acid and isocrotonic acid. Acrylic and methacrylic acid are preferred. Examples of suitable aliphatic esters of olefinically unsaturated carboxylic acids capable of free-radical polymerization include, in particular, esters of alpha,beta-olefinically unsaturated monocarboxylic acids with aliphatic alcohols. Examples of suitable olefinically unsaturated carboxylic acids are the above mentioned acids. The alcohols are, in particular, aliphatic monohydric branched or unbranched alcohols having 1-20 carbon atoms in the molecule. Examples of (meth)acrylates with aliphatic alcohols are methyl acrylate, ethyl acrylate, isopropyl acrylate, tert.-butyl acrylate, n-butyl acrylate, isobutyl acrylate, 2-ethylhexyl acrylate, lauryl acrylate, stearyl acrylate and the corresponding methacrylates.

Examples of suitable vinyl esters are vinyl acetate, vinyl propionate and vinyl esters of saturated monocarboxylic acids branched in the alpha position, e.g., vinyl esters of saturated alpha,alpha'-dialkylalkane monocarboxylic acids and vinyl esters of saturated alpha-alkylalkane monocarboxylic acids having in each case 5-13 carbon atoms, preferably 9-11 carbon atoms in the molecule.

Examples of vinylaromatic hydrocarbons preferably are those having 8-12 carbon atoms in the molecule. Examples of such monomers are styrene, alpha-methylstyrene, chlorostyrenes, vinyltoluenes, 2,5-dimethylstyrene, p-methoxystyrene and tertiary-butylstyrene. Most preferred styrene is used as component c).

Examples of other additional suitable unsaturated monomers, which contain apart from an olefinic double bond further functional groups are urea, amine, amide, acetoacetate, sulfonic acid, silane and imidazole functional unsaturated monomers as ethyleneurea ethyl (meth)acrylate, dimethylaminoethyl (meth)acrylate, acetoacetoxyethyl (meth)acrylate, (meth)acrylamide, alkoxy methyl (meth)acrylamides, vinyl silane, methacryloxyethyl trialkoxysilanes, acrylamido 2 - methyl propane, sulfonic acid, vinyl imidazole.

Examples of suitable lactones (component d) are those containing 3 to 15 carbon atoms in the ring and where the rings may also have various substituents. Preferred lactones are gamma butyrolactone, delta valerolactone, epsilon caprolactone, beta-hydroxy-beta-methyl-delta valerolactone, lambda laurinlactone or mixtures thereof. Epsilon caprolactone is particularly preferred.

The hydroxy-functional (meth)acrylic copolymers A) don't contain epoxy-functional olefinically unsaturated monomers capable of free-radical polymerization.
According to the invention it is essential that the hydroxy-functional (meth)acrylic copolymers A) are obtained by copolymerizing monomers a) to c) (step Al) and reacting at least a part of the hydroxyl groups of the resultant copolymer obtained in step Al) with component d) (step All).

The preparation of the hydroxy-functional (meth)acrylic copolymer in step Al) takes place by radical copolymerization. This may be carried out in a manner known to the skilled person by conventional processes, particularly by radical solution polymerization using radical initiators. Examples of suitable radical initiators are dialkyl peroxides, diacyl peroxides, hydroperoxides such as cumene hydroperoxide, peresters, peroxydicarbonates, perketals, ketone peroxides, azo compounds, such as, 2,2'-azo-bis-(2,4-dimethylvaleronitrile), azo-bis-isobutyronitrile, C-C-cleaving initiators, such as, e.g., benzpinacol derivatives. The initiators may be used in amounts from 0.1 to 4.0 wt-%, for example, based on the initial monomer weight.

The solution polymerization process is generally carried out in such a way that the solvent is charged to the reaction vessel, heated to the boiling point and the monomer/initiator mixture is metered in continuously over a particular period. Polymerization is carried out preferably at temperatures between 60° C and 200° C and more preferably at 130° C to 180° C.

Examples of suitable organic solvents which may be used advantageously in solution polymerization and also later in the coating compositions according to the invention include: glycol ethers, such as, ethylene glycol dimethylether; propylene glycol dimethylether; glycol ether esters such as ethyl glycol acetate, butyl glycol acetate, 3-methoxy-n-butyl acetate, butyl diglycol acetate, methoxy propyl acetate, esters, such as, butyl acetate, isobutyl acetate, amyl acetate; ketones, such as, methyl ethyl ketone, methyl isobutyl ketone; cyclohexanone, isophorone, aromatic hydrocarbons (e.g., with a boiling range from 136°C to 180° C) and aliphatic hydrocarbons. Chain transfer agents such as, e.g., mercaptans, thioglycolates, cumene or dimeric alpha methylstyrene may be used to control the molecular weight.

The hydroxyl groups of the hydroxy-functional (meth)acrylic copolymers obtained in step Al) are modified at least partially with lactones (component d). This takes place by means of an esterification reaction, which proceeds with ring opening of the lactone. Again, hydroxyl groups are formed in the terminal position during the reaction.

The hydroxy-functional (meth)acrylic copolymers A) of the present invention may be prepared by polymerizing the monomers a) to c) in step Al) in the presence of component d) or by polymerizing the monomers a) to c) in step Al) separately and then adding component d.

The two-component coating compositions of the present invention contain at least one polyisocyanate having free isocyanate groups as cross-linking agents for the hydroxy-functional (meth)acrylic copolymers.

Examples of the polyisocyanates include any organic polyisocyanates having aliphatically, cycloaliphatically, araliphatically and/or aromatically bound free isocyanate groups. The polyisocyanates are liquid at room temperature or liquefied by the addition of organic solvents. The polyisocyanates generally have a viscosity from 1 to 1 to 6,000 mPas at 23° C, preferably more than 5 and less than 3,000 mPas.

Polyisocyanates of this kind are known to the skilled person. The polyisocyanates are preferably polyisocyanates or polyisocyanate mixtures having exclusively aliphatically and/or cycloaliphatically bound isocyanate groups having an average NCO functionality from 1.5 to 5, preferably 2 to 4.

Particularly suitable examples are the so-called "coating polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the inherently known derivatives of said diisocyanates having biuret, allophanate, urethane and/or isocyanurate groups from which, after their preparation, excess starting diisocyanate is removed, preferably by distillation, to obtain a residual content of less than 0.5 wt-%. Triisocyanates such as nonane triisocyanate may also be used.

Sterically hindered polyisocyanates are also suitable. Examples thereof are 1,1,6,6-tetramethyl-hexamethylene diisocyanate, 1,5-dibutyl-penta-methylene diisocyanate, p- or m-tetramethylxylylene diisocyanate and the corresponding hydrogenated homologues.

ln principle, diisocyanates may be reacted in the usual way to higher functionality compounds, for example, by trimerization or by reaction with water or polyols, such as, e.g., trimethylolpropane or glycerin.

The polyisocyanate cross-linking agents may be used on their own or in mixture. They are the conventional polyisocyanate cross-linking agents in the coating industry which are described comprehensively in the literature and are also available as commercial products.

The polyisocyanates may also be used in the form of isocyanate-modified resins.

The coating compositions of the present invention may contain additional hydroxy-functional binders apart from the hydroxy-functional (meth)acrylic copolymers A). For example, the additional hydroxy-functional binders may be hydroxy-functional binders well known to the skilled person, of the kind used for the formulation of solvent-based coating compositions. Examples of additional suitable hydroxy-functional binders include hydroxy-functional polyester, alkyd, polyurethane and/or poly(meth)acrylic resins which are different from the (meth)acrylic copolymers A). The additional hydroxy-functional binders may also be present in the modified form, e.g., in the form of (meth)acrylated polyesters or (meth)acrylated polyurethanes. They may be used on their own or in a mixture. The proportion of additional hydroxy-functional binders may be 0 to 50 wt-%, for example, based on the amount of hydroxy-functional (meth)acrylic copolymers A). The coating compositions may also contain low molecular weight reactive components, so-called reactive diluents that are capable of reacting with the cross-linking agent. Examples of these include hydroxy- or amino-functional reactive diluents.

The hydroxy-functional (meth)acrylic copolymers A) and the polyisocyanate cross-linking agents B) are used in each case in such quantity ratios that the equivalent ratio of hydroxyl groups of the (meth)acrylic copolymers A) to the isocyanate groups of the cross-linking agent is 5 : 1 to 1 : 5, for example, preferably, 3 : 1 to 1 : 3, particularly preferably, 1.5 : 1 to 1 : 1.5. If further hydroxy-functional binders and reactive thinners are used, their reactive functions should be taken into consideration when calculating the equivalent ratio.

The coating compositions according to the invention contain organic solvents. The solvents may originate from the preparation of the binders or they may be added separately. They are organic solvents typical of those used for coatings and well known to the skilled person, for example, those already mentioned above for the preparation of solution polymers.

The coating compositions according to the invention may contain pigments and/or fillers. Suitable pigments are all the conventional color-imparting and/or special effect-imparting coating pigments of an organic or inorganic nature.

The coating compositions may contain conventional coating additives. The additives are the conventional additives, which may be used, in the coating sector. Examples of such additives include light protecting agents, e.g., based on benzotriazoles and HALS compounds (hindered amine light stabilizers), leveling agents based on (meth)acrylic homopolymers or silicone oils, rheology-influencing agents, such as, fine-particle silica or polymeric urea compounds, thickeners, such as, partially cross-linked polycarboxylic acid or polyurethanes, anti-foaming agents, wetting agents, curing catalysts for the cross-linking reaction, for example, organic metal salts, such as, dibutyltin dilaurate, zinc naphthenate and compounds containing tertiary amino groups such as triethylamine

The hydroxyl group-containing binder component and the polyisocyanate component may be mixed together only shortly before application. ln principle, the coating compositions may be adjusted with organic solvents to spray viscosity before application.

The coating compositions according to the invention may be applied by known methods, particularly by spraying. The coatings obtained may be cured at room temperature or by forced drying at higher temperatures, e.g., up to 80° C, preferably, at 20° C to 60° C. They may also, however, be cured at higher temperature from, for example, 80° C to 160° C.

The coating compositions according to the invention are suitable for automotive and industrial coating. ln the automotive coating sector the coating agents may be used both for OEM (Original Equipment Manufacture) automotive coating and for automotive and automotive part refinishing. Stoving or baking temperatures from 80° C to 140° C, for example, preferably from 110° C to 130° C, are used for standard automotive coating. Curing temperatures from 20° C to 80° C, for example, particularly from 40° C to 60° C are used for automotive refinishing.

The coating compositions according to the invention may be formulated as pigmented top coats or as transparent clear coats and used for the preparation of the outer pigmented top coat layer of a multi-layer coating or for the preparation of the outer clear coat layer of a multi-layer coating. The present invention also relates, therefore, to the use of the coating compositions according to the invention as a top coat coating composition and as a clear coat coating composition, and to a process for the preparation of multi-layer coatings, wherein in particular the pigmented top coat and transparent clear coat layers of multi-layer coatings are produced by means of the coating compositions according to the invention

The coating compositions may be applied as a pigmented topcoat layer, for example, to conventional 1-component or 2-component primer surfacer layers. The coating compositions may be applied as transparent clear coat coating compositions, for example, by the wet-in wet method, to solvent-based or aqueous color- and/or special effect-imparting base coat layers. In this case, the color- and/or special effect-imparting base coat layer is applied to an optionally pre-coated substrate, particularly pre-coated vehicle bodies or parts thereof, before the clear coat coating layer of the clear coat coating compositions according to the invention is applied. After an optional flash-off phase, both layers are then cured together. Within the context of OEM automotive coating, flash-off may be carried out, for example, at 20° C to 80° C and within the context of refinishing over a period of 15 to 45 minutes at ambient temperature, depending on the relative humidity.

The coating compositions of the present invention may be used as clear coat and topcoat coating compositions in automotive refinishing. Top coat layers and clear coat layers with good scratch resistance and good hardness may be achieved in combination with an excellent physical drying performance.

The invention will be explained in more detail on the basis of the examples below. All parts and percentages are on a weight basis unless otherwise indicated.

### Examples

### Example 1

### Preparation of a hydroxy-functional (meth)acrylic copolymer A1)

A four liter three-necked, glass flask equipped with an agitator, contact thermometer, dropping funnel and condensor was charged with 599.96 grams of Solvesso 100 (mixture of aromatic hydrocarbons, onset boiling point 164° C, Exxon), 0.04 grams of dibutyltin dilaurate and 120 grams of butylacetate and heated to reflux at about 155° C. A monomer/initiator mixture consisting of 360 grams styrene, 360 grams isobornyl methacrylate, 1080 grams of hydroxypropyl methacrylate (mixture of isomers), 600 grams of epsilon caprolactone, 40 grams of di-tertiary-butylperoxide, 266.8 grams of Solvesso 100 and 53.2 grams of butylacetate were added continuously from the dropping funnel over 5 hours to the reactor contents. The dropping funnel was rinsed with 40 grams Solvesso 100 and the mixture refluxed till constant viscosity. The reactor contents were then diluted with 120 grams of Solvesso 100 and 360 grams of butylacetate.

The solids content were 59.9 % at a viscosity of I-1/4 Gardner-Holdt. The calculated hydroxyl value was 175 mg KOH/g, the acid value 4.2 mg KOH/g and the measured molecular weight (by Gel Permeation Chromatography using a polystyrene standard) was Mn/Mw=1800/4700. The caprolactone content was 25% on solids. The calculated hydroxyl value of the copolymer backbone was 233 mg KOH/g and the Tg of the copolymer backbone was 77° C, calculated according to the Flory-Fox equation. (copolymer backbone = composition of copolymer without epsilon caprolactone).

### Example 2

### Preparation of a hydroxy-functional (meth)acrylic copolymer A2)

A four liter three-necked, glass flask equipped with an agitator, contact thermometer, dropping funnel and condensor was charged with 120 grams of n-butylacetate, 599.96 grams of Solvesso 100 (mixture of aromatic hydrocarbons, onset boiling point 164° C, Exxon) and 0.04 grams of dibutyltin dilaurate and heated to reflux at about 160° C. A monomer/initiator mixture consisting of 360 grams styrene, 432 grams isobornyl methacrylate, 360 grams of hydroxypropyl methacrylate (mixture isomers), 648 grams of 2-hydroxyethylmethacrylate, 600 grams of epsilon caprolactone, 53.2 grams of n butylacetate, 40 grams of di-tertiary-butylperoxide and 266.8 grams of Solvesso 100 were added continuously from the dropping funnel over 5 hours to the reactor contents. The dropping funnel was rinsed with 40 grams Solvesso 100 and the mixture refluxed till constant viscosity. The reactor contents were then diluted with 480 grams of butylacetate.

The solids content were 59.5 % at a viscosity of M Gardner-Holdt. The calculated hydroxyl value was 175 mg KOH/g, the acid value 3.4 mg KOH/g and the measured molecular weight (by Gel Permeation Chromatography using a polystyrene standard) was Mn/Mw=1800/5400. The caprolactone content was 25% on solids. The calculated hydroxyl value of the copolymer backbone was 233 mg KOH/g and the Tg of the copolymer backbone was 75° C, calculated according to the Flory-Fox equation (copolymer backbone = composition of copolymer without epsilon caprolactone).

### Example 3 (Comparative Example)

### Preparation of a hydroxy-functional (meth)acrylic copolymer A3)

A four liter three-necked, glass flask equipped with an agitator, contact thermometer, dropping funnel and condensor was charged with 719.96 grams of Solvesso 100 (mixture of aromatic hydrocarbons, onset boiling point 164° C, Exxon) and 0.04 grams of dibutyltin dilaurate and heated to reflux at about 165° C. A monomer/initiator mixture consisting of 480 grams styrene, 552 grams isobornyl methacrylate, 360 grams of hydroxypropyl methacrylate (mixture isomers), 648 grams of 2- hydroxyethylmethacrylate, 360 grams of epsilon caprolactone, 80 grams of di-tertiary-butylperoxide and 266.8 grams of Solvesso 100 were added continuously from the dropping funnel over 5 hours to the reactor contents. The dropping funnel was rinsed with 40 grams Solvesso 100 and the mixture refluxed till constant viscosity. The reactor contents were then diluted with 480 grams of butylacetate.

The solids content was 64.9 % at a viscosity of R+1/3 Gardner-Holdt. The calculated hydroxyl value was 175 mg KOH/g, the acid value of 3.5 mg KOH/g and the measured molecular weight (by Gel Permeation Chromatography using a polystyrene standard) was Mn/Mw=1300/3000. The caprolactone content on binder solids was 15%. The calculated hydroxyl value of the copolymer backbone was 205 mg KOH/g and the Tg of the copolymer backbone was 80° C, calculated according to the Flory-Fox equation (copolymer backbone = composition of copolymer without epsilon caprolactone).

### Example 4 (Comparative example)

### Preparation of a hydroxy-functional (meth)acrylic copolymer A4)

A four liter three-necked, glass flask equipped with an agitator, contact thermometer, dropping funnel and condensor was charged with 719.96 grams of Solvesso 100 (mixture of aromatic hydrocarbons, onset boiling point 164° C, Exxon) and 0.04 grams of dibutyltin dilaurate and heated to reflux at about 165° C. A monomer/initiator mixture consisting of 360 grams styrene, 552 grams isobornyl methacrylate, 360 grams of hydroxypropyl methacrylate (mixture of isomers), 576 grams of 2- hydroxyethylmethacrylate, 360 grams of epsilon caprolactone, 80 grams of di-tertiary-butylperoxide and 266.8 grams of Solvesso 100 were added continuously from the dropping funnel over 5 hours to the reactor contents. The dropping funnel was rinsed with 40 grams Solvesso 100 and the mixture refluxed till constant viscosity. The reactor contents were then diluted with 480 grams of butylacetate.

The solids content was 61% at a viscosity of E+1/2 Gardner-Holdt. The calculated hydroxyl value was 155 mg KOH/g, the acid value 3.6 mg KOH/g and the measured molecular weight (by Gel Permeation Chromatography using a polystyrene standard) was Mn/Mw=1400/3400. The caprolactone content on binder solids was 25%.

The calculated hydroxyl value of the copolymer backbone was 205 mg KOH/g and the Tg was 80° C, calculated according to the Flory-Fox equation (copolymer backbone = composition of copolymer without epsilon caprolactone).

### Example 5 (Comparative Example)

### Preparation of a hydroxy-functional (meth)acrylic copolymer A5) according EP 1201690

A 4 liter three-necked, ground glass flask fitted with an agitator, contact thermometer, dropping funnel and spherical condenser was charged with 720 grams of Solvesso 100 (mixture of aromatic hydrocarbons, onset boiling point 164° C, Exxon) and heated to 164° C with stirring and reflux cooling. A monomer/inititator mixture of 480 grams of styrene, 3960 grams of hydroxypropyl methacrylate, 600 grams of isobornylmethacrylate, 360 grams of glycidyl methacrylate, 80 grams of di- tertiary butylperoxide and 280 grams of Solvesso 100 were added continuously from the dropping funnel over a period of 5 hours. After the addition, the monomer-mixing vessel and the dropping funnel were rinsed with 40 grams of Solvesso 100 and the contents added to the reaction mixture. The reaction mixture was held at reflux for one more hour before cooling with 480 grams Solvesso 100. The resulting polymer solution had a solids content of 60.2% at a Gardner-Holdt viscosity of T+1/2 and a molecular weight distribution of Mn/Mw = 1250/3000. ln another reactor setup as described above, 8.5 parts of dimethylolpropionic acid were refluxed in 6.1984 parts of n-butylacetate, 0.0016 parts dibutyltindilaurate and 22.8 parts of epsilon caprolactone for 6 hours. Next, 100 parts of the above polymer solution were added, followed by the addition of 0.014 parts tetraethylammoniumbromide and 0.986 parts n-butylacetate. This mixture was refluxed till the acid value remained constant before diluting with 2 parts of n-butylacetate.

The final solids content of the graft copolymer was 69% with a viscosity of W+1/4 at an acid value of 6.7 mg KOH/g, a calculated hydroxyl value of 175 mg KOH/g and molecular weight distribution of Mn/Mw = 1400/3900. The caprolactone content on binder solids was 25%.

### Example 6 (Comparative Example)

### Preparation of a hydroxy-functional (meth)acrylic copolymer A6), prepared according the method described in EP1227113

A reaction product of 26.8 parts hydroxypropyl methacrylate and 15 parts of epsilon caprolactone was prepared by heating above mixture in 6 parts Solvesso 100 with 0.02 parts di-tertiary butyl hydroxy toluene (BHT) and 0.001 parts of dibutyltin dilaurate at 110-120° C for 8 hours while air is purged in the reaction mass. ln a next step, a copolymer was prepared as in Example 1 in a reactor setup as described above by adding over a 5 hour period a mixture of 360 grams styrene, 360 grams isobornyl methacrylate, 1920.84 grams of the hydroxypropyl methacrylate-epsilon caprolactone reaction product solution above, 40 grams of di-tertiary butylperoxide, 25.2 grams of Solvesso 100, 53.2 grams of n butylacetate to a reactor with a blend of 600 grams Solvesso 100 and 120 grams of n-butylacetate at 155° C reflux temperature. The addition funnel was rinsed with 40 grams of Solvesso 100 and the reactor contents held for 1 hour at reflux temperature before thinning down with a blend of 120 grams of n butylacetate and 360 grams of Solvesso 100.

The solids content was 54.1 % at a viscosity of F-1/4 Gardner-Holdt. The calculated hydroxyl value was 175 mg KOH/g, the acid value was 3.8 mg KOH/g and the measured molecular weight (by Gel Permeation Chromatography using a polystyrene standard) was Mn/Mw = 1700/4500. The caprolactone content was 25% on solids. The calculated hydroxyl value of the copolymer backbone was 233 mg KOH/g and the Tg of the copolymer backbone was 77° C, calculated according to the Flory-Fox equation (copolymer backbone = composition of copolymer without epsilon caprolactone).

### Example 7

### Preparation of coating compositions

Two-component clear coats were prepared based on the hydroxy-functional (meth)acrylic copolymers A1) to A6) according to Examples 1-6 (component I) and based on a polyisocyanate cross-linking agent (component II). The components I and II were prepared as follows:
CC = clear coat
Comp. CC = comparative clear coat

| **Components I** | Standard CC | CC1 / Example 1 | Comp. CC 6 / Example 6 |
|---|---|---|---|
| Methyl isobutyl ketone | 4.47 | 5.56 | |
| Amyl acetate | 2.36 | 3.25 | 0.98 |
| Ethyl 3-ethoxypropionate | 3.43 | 4.72 | 4.21 |
| Alkylene glycol alkylether acetate | 2.41 | 3.32 | 2.38 |
| Levelling agent (polyether modified polysiloxane) | 0.10 | | |
| Levelling agent (polyester modified polysiloxane) | | 0.05 | 0.05 |
| Levelling agent (polyacrylate) | 0.2 | 0.33 | 0.33 |
| Dibutyl tin dilaurate (1% solution) | 1.49 | 0.87 | 0.87 |
| Light stabilizer (HALS) | 0.3 | 0.76 | 0.76 |
| UV absorber | 0.6 | 1.52 | 1.52 |
| Diethyl ethanol amine | 0.25 | 0.29 | 0.29 |
| Acrylic copolymer standard (1) | 83.29 | | |
| Acrylic copolymer Example 1 (59.9%) | | 78.13 | |
| Acrylic copolymer Example 6 (54.1%) | | | 88.26 |
| Acetic acid | 0.3 | 0.35 | 0.35 |
| Butylacetate | 0.8 | 0.85 | |
| Total | 100 | 100 | 100 |

| | | | |
|---|---|---|---|
| (1) Acrylic Copolymer standard - 47.7% solids of an acrylic polymer of styrene/methylmethacrylate/hydroxy ethylmethacrylate/acrylic acid - Cardura® E IO (glycidyl ester of a versatic acid having 10 carbon atoms in the acid molecule), having a weight average molecular weight Mw of 6,000 and OH value of 1444 mg KOH/g. | | | |

| **Components** I | CC2 / Example 2 | Comp. CC3 / Example 3 | Comp. CC4 / Example 4 | Comp. CC5 / Example 5 |
|---|---|---|---|---|
| Methyl isobutyl ketone | 7.74 | 7.74 | 7.74 | 7.74 |
| Amyl acetate | 4.52 | 4.52 | 4.52 | 4.52 |
| Ethyl 3-ethoxypropionate | 6.57 | 6.57 | 6.57 | 6.57 |
| Alkylene glycol alkylether acetate | 4.61 | 4.61 | 4.61 | 4.61 |
| Levelling agent (polyester modified polysiloxan) | 0.05 | 0.05 | 0.05 | 0.05 |
| Levelling agent | 0.3 | 0.3 | 0.3 | 0.3 |
| (poylacrylate) | 0.8 | 0.8 | 0.8 | 0.8 |
| Dibutyl tin dilaurate (1% | 0.7 | 0.7 | 0.7 | 0.7 |
| solution) | 1.4 | 1.4 | 1.4 | 1.4 |
| Light stabilizer (HALS) | 0.27 | 0.27 | 0.27 | 0.27 |
| UV absorber | | | | |
| Diethyl ethanol amine | | | | |
| Acrylic copolymer Example 1 (59,9%) | 71.92 | | | |
| Acrylic copolymer Example 3 (60% in butylacetate) | | 71.92 | | |
| Acrylic copolymer Example 4 (60% in butylacetate) | | | 71.92 | |
| Acrylic copolymer Example 5 (60% in butylacetate %) | | | | 71.92 |
| Acetic acid | 0.32 | 0.32 | 0.32 | 0.32 |
| Butylacetate | 0.8 | 0.8 | 0.8 | 0.8 |
| Total | 100 | 100 | 100 | 100 |

All figures in the tables above are weight-%. ln addition for comparison purposes a standard clear coat based on the acrylic copolymer standard (1) has been applied.

### Component II

14.8 parts by weight of xylene, 18.5 parts by weight of butyl acetate, 1.4 parts by weight of ethylacetate, 65.3 parts by weight of a commercially available polyisocyanate (Desmodur® 3390/Bayer) were mixed homogeneously to obtain the solution of curing agent.

Component I and component II were mixed in each case homogeneously in amounts to achieve a OH/NCO ratio of 1.05 in the coating composition.

### Application of the clear coat compositions

Standard metal panels, on which a commercial primer and a commercial solvent borne basecoat has been applied, were coated with the clear coats from Examples 1-6. The clear coats were applied in a dry film thickness of 50 µm and hardened for 30 minutes at 60° C (horizontally) after 10 minutes flash-off at room temperature.

The coating results are shown in the following tables:

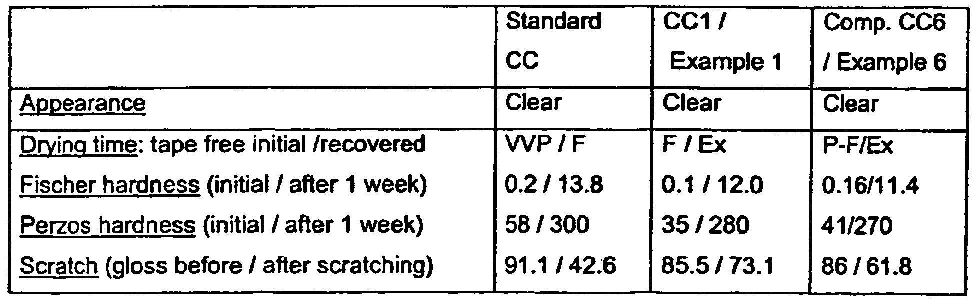

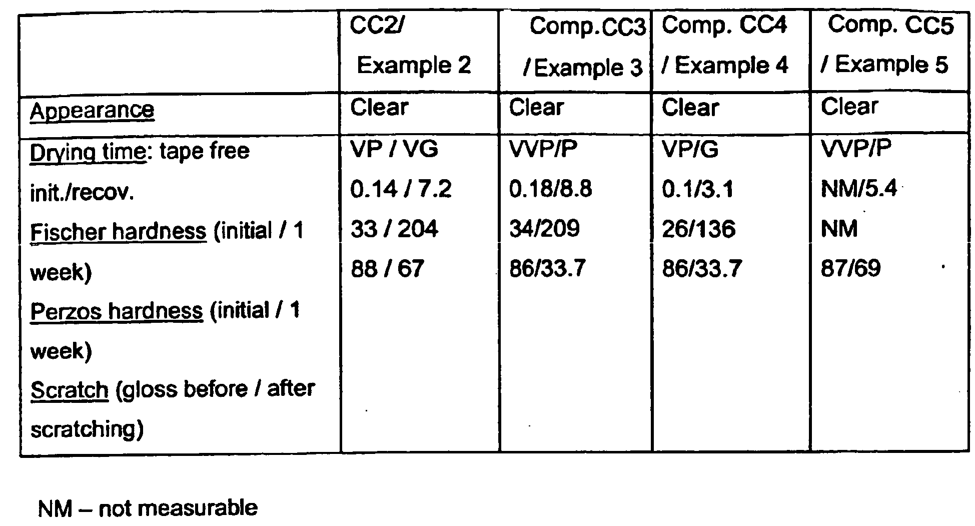

### Test methods used:

### Drying / tape free initial:

After a 10 minutes cool-down period after baking, a strip of masking tape was applied across the panel, smoothing it out manually using moderate firm pressure to insure uniform contact. A 2 kg weight was rolled over the tape to and from. After 10 minutes the tape was removed and the degree of marking was observed. After 30 minutes recovery, the tape imprint was evaluated again.
Ratings: VVP - very very poor, VP - very poor, P - poor, F - fair, G - good, VG - very good, Ex - excellent

### Scratch Resistance:

The clear coated panels were scratched after 7 days aging using the linear Gardner brush test (nylon brush) (according to ASTM D2486-89) through using an abrasive medium based on calcium carbonate. Each panel undergoes 30 brush cycles. The gloss before and after scratching was measured.

The clear coats according to the invention show better overall results in comparison to the comparative clear coats. Scratch resistance has been increased remarkably compared with the standard clear coat, while maintaining a very good hardness. Compared with comparative clear coat 6, a better drying performance (tape free initial) and improved scratch resistance have been achieved.

Compared with comparative clear coat 4, hardness and scratch resistance have been improved remarkably. Comparative clear coat 5 shows good scratch resistance but very poor drying performance and unacceptable hardness.

## Claims

1. A coating composition comprising
A) at least one hydroxy-functional (math)acrylic copolymer having an OH value from 160 to 200 mg KOH/g and a weight average molecular weight Mw from 2,500 to 30,000 and
B) at least one polyisocyanate cross-linking agent;
wherein the hydroxy-functional (meth)acrylic copolymer A) is obtained by
Al) free-radically copolymerizing a monomer mixture of
a) 30 - 60 wt-% of at least one hydroxy functional free-radically copolymerizable olefinically unsaturated monomer.
b) 15 - 40 wt-% of at least one cycloaliphatic ester of a free-radically copolymerizable olefinically unsaturated carboxylic acid and
c) 10 - 40 wt-% of at least one additional free-radically copolymerizable olefinically unsaturated monomer which is different from component a) and b) and
All) reacting at least part of the hydroxyl groups of the hydroxy-functional (meth)acrylic copolymer obtained in step Al) with
d) 18 - 40 wt-% of at least one lactone compound:
wherein the proportions by weight of components a) to d) totaling 100 wt-% and wherein the hydroxy-functional (meth)acrylic copolymer obtained in step Al) has a glass transition temperature Tg of at least 50° C and wherein said copolymer is free of epoxy-functional free-radically copolymerizable olefinically unsaturated monomers.

2. The coating compositions according to claim 1, wherein the hydroxy-functional (meth)acrylic copolymer A) has an OH value from 170-190 mg KOH/g, a weight average molecular weight Mw from 2,500 to 20,000.

3. The coating compositions according to one of claims 1 to 2, wherein the hydroxy-functional (meth)acrylic copolymer obtained in step Al) has an OH value from 170-280 mg KOH/g, a weight average molecular weight Mw from 2,000 to 20,000 and a glass transition temperature Tg from 60° C to 100° C.

4. The coating compositions according to one of claims 1 to 3, in which component a) comprises at least one hydroxyalkyl ester of (meth)acrylic acid.

5. The coating compositions according to one of claims 1 to 4, in which component b) comprises at least one compound selected from the group consisting of cyclohexyl (meth)acrylate, trimethylcyclohexyl (meth)acrylate, 4-tert, butylcyclohexyl (meth)acrylate, isobornyl (meth)acrylate.

6. The coating compositions according to one of claims 1 to 5, in which component c) comprises at least one vinyl aromatic hydrocarbon.

7. The coating composition according to one of claims 1 to 6, in which component d) is epsilon-caprolacton.

8. A process which comprises applying a multi-layer coating on a substrate using a coating composition according to one of claims 1 to 7 and curing said coating.

9. A process for multi-layer coating of substrates by applying a top coat layer a substrate pre-coated with one or more coating layers, wherein the top coat layer is composed of a color-and/or special effect-imparting base coat coating compound and a dear coat coating compound, and wherein the clear coating layer is composed of a coating composition according to one of claims 1 to 7.

10. A process for multi-layer coating of substrates by applying a top coat to a substrate pre-coated with one or more coating layers, wherein the top coat layer composed of a pigmented one-layer top coat coating compound is applied, and wherein the pigmented one-layer top coat coating layers is composed of a coating composition according to one of claims 1 to 7.

11. The process according to claim 9 or 10, wherein the substrates are selected from the group consisting of automotive bodies and automotive body parts.

## Patentansprüche

1. Beschichtungszusammensetzung, aufweisend:
A) mindestens ein hydroxyfunktionelles (meth)acrylisches Copolymer mit einem OH-Wert von 160 bis 200 mgKOH/g und eines massegemittelten Molekulargewichts Mw von 2.500 bis 30.000 und
B) mindestens ein Polyisocyanat-Vernetzungsmittel;
wobei das hydroxyfunktionelle (meth)acrylische Copolymer A) erhalten wird durch:
AI) radikalische Copolymerisation einer Monomermischung von:
a) 30-60 Gew.% mindestens eines hydroxyfunktionellen, radikalisch copolymerisierbaren, olefinisch ungesättigten Monomers,
b) 15-40 Gew.% mindestens eines cycloaliphatischen Esters, einer radikalisch copolymerisierbaren, olefinisch ungesättigten Carbonsäure und
c) 10-40 Gew.% mindestens eines zusätzlichen radikalisch copolymerisierbaren, olefinisch ungesättigten Monomers, das von der Komponente a) und b) verschieden ist, und
AII) Umsetzen mindestens eines Teils der Hydroxyl-Gruppen des hydroxyfunktionellen (meth)acrylischen Copolymers aus Schritt AI) mit
d) 18-40 Gew.% mindestens einer Lacton-Verbindung;
wobei die Gewichtsanteile der Komponenten a) bis d) insgesamt 100 Gew.% betragen und wobei das in Schritt AI) erhaltene hydroxyfunktionelle, (meth)acrylische Copolymer eine Glasübergangstemperatur Tg von mindestens 50°C hat und wobei das Copolymer frei ist von epoxyfunktionellen, radikalisch copolymerisierbaren, olefinisch ungesättigten Monomeren.

2. Beschichtungszusammensetzungen nach Anspruch 1, wobei das hydroxyfunktionelle (meth)acrylische Copolymer A) einen OH-Wert von 170 bis 190 mgKOH/g hat und ein massegemitteltes Molekulargewicht Mw von 2.500 bis 20.000.

3. Beschichtungszusammensetzungen nach einem der Ansprüche 1 bis 2, wobei das in Schritt AI) erhaltene hydroxyfunktionelle (meth)acrylische Copolymer einen OH-Wert von 170 bis 280 mgKOH/g hat, ein massegemitteltes Molekulargewicht Mw von 2.000 bis 20.000 und eine Glasübergangstemperatur Tg von 60° bis 100°C.

4. Beschichtungszusammensetzungen nach einem der Ansprüche 1 bis 3, wobei Komponente a) mindestens einen (Meth)acrylsäure-Hydroxyalkylester aufweist.

5. Beschichtungszusammensetzungen nach einem der Ansprüche 1 bis 4, wobei Komponente b) mindestens eine Verbindung aufweist, die ausgewählt ist aus der Gruppe bestehend aus: Cyclohexyl(meth)acrylat, Trimethylcyclohexyl(meth)acrylat, 4-*tert*.-Butylcyclohexyl(meth)acrylat, Isobornyl(meth)acrylat.

6. Beschichtungszusammensetzungen nach einem der Ansprüche 1 bis 5, wobei Komponente c) mindestens einen vinylaromatischen Kohlenwasserstoff aufweist.

7. Beschichtungszusammensetzungen nach einem der Ansprüche 1 bis 6, wobei Komponente d) Epsilon-Caprolacton ist.

8. Verfahren, umfassend das Aufbringen einer mehrlagigen Beschichtung auf ein Substrat unter Verwendung einer Beschichtungszusammensetzung nach einem der Ansprüche 1 bis 7 und Härten der Beschichtung.

9. Verfahren zum mehrlagigen Beschichten von Substraten durch Aufbringen einer Deckbeschichtungsschicht auf ein zuvor mit einer oder mehreren Beschichtungsschichten beschichtetes Substrat, wobei die Deckbeschichtungsschicht zusammengesetzt ist aus einer Farb- und/oder einer Spezialeffekt-vermittelnden Basisbeschichtungsverbindung und einer Klarbeschichtungsverbindung und wobei die Klarbeschichtungsschicht zusammengesetzt ist aus einer Beschichtungszusammensetzung nach einem der Ansprüche 1 bis 7.

10. Verfahren zum mehrlagigen Beschichten von Substraten durch Aufbringen einer Deckbeschichtungsschicht auf ein zuvor mit einer oder mehreren Beschichtungsschichten beschichtetes Substrat, wobei die Deckbeschichtungsschicht, die aus einer Pigment enthaltenden einlagigen Deckbeschichtungsverbindung zusammengesetzt ist, aufgtragen wird und wobei die Schichten der Pigment enthaltenden einlagigen Deckbeschichtungsverbindung zusammengesetzt sind aus einer Beschichtungszusammensetzung nach einem der Ansprüche 1 bis 7.

11. Verfahren nach Anspruch 9 oder 10, wobei die Substrate ausgewählt sind aus der Gruppe, bestehend aus Autokarosserien und Autokarosserieteilen.

## Revendications

1. Composition de revêtement comprenant
A) au moins un copolymère (méth)acrylique à groupe fonctionnel hydroxy ayant une valeur OH allant de 160 à 200 mg de KOH/g et un poids moléculaire moyen pondéral Mw de 2 500 à 30 000 et
B) au moins un agent de réticulation de type polyisocyanate ;
dans lequel le copolymère (méth)acrylique à groupe fonctionnel hydroxy A) est obtenu par
AI) copolymérisation radicalaire d'un mélange de monomères de
a) 30-60 % en poids d'au moins un monomère oléfiniquement insaturé, copolymérisable de manière radicalaire, à groupe fonctionnel hydroxy,
b) 15-40 % en poids d'au moins un ester cycloaliphatique d'un acide carboxylique oléfiniquement insaturé, copolymérisable de manière radicalaire et
c) 10-40 % en poids d'au moins un monomère supplémentaire oléfiniquement insaturé, copolymérisable de manière radicalaire qui est différent du composant a) et b) et
AII) réaction d'au moins une partie des groupes hydroxyle du copolymère (méth)acrylique à groupe fonctionnel hydroxy obtenu dans l'étape AI) avec
d) 18-40 % en poids d'au moins un composé lactone :
dans laquelle les proportions en poids des composants a) à d) totalisant 100 % en poids et dans laquelle le copolymère (méth)acrylique à groupe fonctionnel hydroxy obtenu dans l'étape AI) a une température de transition vitreuse Tg d'au moins 50°C et dans laquelle ledit copolymère est exempt de monomères oléfiniquement insaturés, copolymérisables de manière radicalaire, à groupe fonctionnel epoxy.

2. Compositions de revêtement selon la revendication 1, dans lesquelles le copolymère (méth)acrylique à groupe fonctionnel hydroxy A) a une valeur OH allant de 170 à 190 mg de KOH/g, un poids moléculaire moyen pondéral Mw de 2 500 à 20 000.

3. Compositions de revêtement selon l'une des revendications 1 à 2, dans lesquelles le copolymère (méth)acrylique à groupe fonctionnel hydroxy obtenu dans l'étape AI) a une valeur OH de 170 à 280 mg de KOH/g, un poids moléculaire moyen pondéral Mw de 2 000 à 20 000 et une température de transition vitreuse Tg de 60°C à 100°C.

4. Compositions de revêtement selon l'une des revendications 1 à 3, dans lesquelles le composant a) comprend au moins un ester hydroxyalkylique d'acide (méth)acrylique.

5. Compositions de revêtement selon l'une des revendications 1 à 4, dans lesquelles le composant b) comprend au moins un composé choisi parmi le groupe constitué du (méth)acrylate de cyclohexyle, (méth)acrylate de triméthylcyclohexyle, (méth)acrylate de 4-*tert*-butylcyclohexyle, (méth)acrylate d'isobomyle.

6. Compositions de revêtement selon l'une des revendications 1 à 5, dans lesquelles le composant c) comprend au moins un hydrocarbure aromatique vinylique.

7. Composition de revêtement selon l'une des revendications 1 à 6, dans laquelle le composant d) est l'epsilon-caprolactone.

8. Procédé qui comprend l'application d'un revêtement multicouche sur un substrat utilisant une composition de revêtement selon l'une des revendications 1 à 7 et le durcissement dudit revêtement.

9. Procédé de revêtement multicouche de substrats par l'application d'une couche de finition à un substrat pré-revêtu d'une ou plusieurs couche(s) de revêtement, dans lequel la couche de finition est composée d'un composé de revêtement de fond conférant de la couleur et/ou un effet spécial et d'un composé de revêtement transparent, et dans lequel la couche de revêtement transparent est composée d'une composition de revêtement selon l'une des revendications 1 à 7.

10. Procédé de revêtement multicouche de substrats par l'application d'une couche de finition à un substrat pré-revêtu d'une ou plusieurs couche(s) de revêtement, dans lequel la couche de finition composée d'un composé monocouche pigmenté de revêtement de finition est appliquée, et dans lequel la couche monocouche pigmentée de revêtement de finition est composée d'une composition de revêtement selon l'une des revendications 1 à 7.

11. Procédé selon la revendication 9 ou 10, dans lequel les substrats sont choisis parmi le groupe constitué des carrosseries automobiles et des pièces de carrosserie automobile.
